(19) Europäisches Patentamt

European Patent Office

Office européen des brevets

(11) **EP 1 672 404 A1**

(12) **EUROPÄISCHE PATENTANMELDUNG**

(43) Veröffentlichungstag:
**21.06.2006 Patentblatt 2006/25**

(51) Int Cl.:
***G02B 21/00*** (2006.01)    ***G02B 21/06*** (2006.01)
***G02B 5/08*** (2006.01)    ***G02B 27/09*** (2006.01)

(21) Anmeldenummer: 04023501.2

(22) Anmeldetag: **01.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **16.07.2004 DE 102004034966**

(71) Anmelder: **CARL ZEISS JENA GmbH**
**07745 Jena (DE)**

(72) Erfinder:
• **Goelles, Michael**
**07745 Jena (DE)**

• **Wolleschensky, Ralf**
**99510 Apolda (DE)**
• **Gräfe, Dieter**
**07745 Jena (DE)**
• **Wald, Matthias**
**07751 Kunitz (DE)**

(74) Vertreter: **Geyer, Fehners & Partner**
**Patentanwälte**
**Perhamerstraße 31**
**80687 München (DE)**

(54) **Beleuchtungsvorrichtung für ein Lichtrastermikroskop mit linienförmiger Abtastung und ihre Verwendung**

(57) Zur Bereitstellung eines im Querschnitt im wesentlichen zeilenförmigen Beleuchtungsstrahls (5), für ein Laserscanningmikroskops mit linienförmiger Abtastung(15), wird eine Beleuchtungsvorrichtung verwendet, die einen im wesentlichen im Querschnitt rotationssymmetrischen Ursprungsstrahl bereitstellt, welcher auf eine Konvertierungseinheit trifft, die dann den gewünschten Beleuchtungsstrahl (5) abgibt und die dazu einen asphärischen, konvexen Spiegel (1) aufweist, der im Bereich des Auftreffpunktes des Ursprungsstrahls (3) stärker gekrümmt ist als in auftreffpunktfernen Bereichen.

Fig. 2

EP 1 672 404 A1

**Beschreibung**

Die Erfindung bezieht sich auf eine Beleuchtungsvorrichtung, die einen in mindestens einer Querschnittsrichtung im wesentlichen homogenen Beleuchtungsstrahl, insbesondere für ein Laserscanningmikroskop, bereitstellt, wobei ein im Querschnitt inhomogener, insbesondere gaußförmiger, Ursprungsstrahl auf eine Konvertierungseinheit geleitet ist, die den Beleuchtungsstrahl abgibt.

In vielen Anwendungen wird ein linienförmig aufgeweiteter Beleuchtungsstrahl eingesetzt, beispielsweise für Barcode-Scanner oder bei zeilenförmig abtastenden Laserscanningmikroskopen. Eine Möglichkeit, einen solchen linienförmigen Strahl zu erhalten, besteht in einer schnellen Ablenkung des Laserstrahls längs einer Zeile, so daß zwar zu jedem Zeitpunkt nur ein Punkt der Zeile beleuchtet ist, über eine gewisse Zeitdauer gemittelt aber eine Zeile ausgeleuchtet wird. Ein anderer Ansatz, der im Stand der Technik zur Erzeugung linienförmig profilierter Beleuchtungsstrahlen ebenfalls eingesetzt wird, verwendet Zylinderoptiken, die bekanntermaßen ein Strahlbündel anisotrop aufweiten. Ein solcher zylinderoptischer Aufbau ist als Spiegeloptik beispielsweise in der US 4.589.738 beschrieben. Dort wird ein Strahl zuerst auf einen nicht näher erläuterten konvexen Spiegel gerichtet und die von dort divergierenden Strahlen werden mittels einer Zylinderlinse auf eine Linie fokussiert.

Eine Zylinderoptik verändert das Strahlprofil prinzipiell nicht, sie weitet es lediglich in einer Richtung auf. Ein gaußförmiger Strahl, wie er üblicherweise von einer Laserstrahlquellen oder einem Kollimator für ein Lichtleiterfaserbündel abgegeben wird, bleibt also auch nach Behandlung mit einer Zylinderoptik im Profil gaußförmig, auch wenn die Breite des Gaußprofils nach der Zylinderoptik nicht mehr in allen Richtungen quer zur Strahlausbreitung gleich ist. Dies hat zur Folge, daß die Strahlungsintensität längs einer Zeile bzw. Linie stark variiert. Bei Anwendungen, die diesbezüglich empfindlich sind, behilft man sich dadurch, daß der Strahl zuerst mit einer Zylinderoptik aufgeweitet wird, wobei die Aufweitung sehr viel größer ist, als die Weite der später geforderten Zeile oder Linie, und dann mittels Blenden Randbereiche der Zeile oder Linie, in denen die Intensität der Strahlung gegenüber dem Zentrum zu stark abgefallen ist, ausblendet. Leider hat dies eine schlechte Effizienz bezüglich der Ausnutzung der ursprünglich erzeugten Strahlungsintensität.

Die US 4.826.299 offenbart eine Linse, die einen Laserstrahl aufweitet und dabei das Strahlprofil nicht-gaußförmig verformt. In diesem Dokument ist die Linse in vielfältigen Ausbildungen im Querschnitt dargestellt, und sie bewirkt eine Aufweitung zu annähernd rechteckigem Strahlprofil. Für Anwendung in der Laserscanningmikroskopie ist der Ansatz der US 4.826.299 jedoch aus chromatischen Gründen ungeeignet.

Der Erfindung liegt deshalb die Aufgabe zugrunde, eine Beleuchtungsvorrichtung der eingangs genannten Art so weiterzubilden, daß eine Eignung für die Laserscanningmikroskopie gegeben ist.

Diese Aufgabe wird erfindungsgemäß dadurch gelöst, daß die Konvertierungseinheit einen asphärischen, konvexen oder konkaven Spiegel aufweist, der zumindest in einer Schnittebene im Bereich des Auftreffpunktes des Ursprungsstrahls stärker gekrümmt ist, als in auftreffpunktfernen Bereichen.

Das Grundprinzip der Strahlformung in der Beleuchtungsvorrichtung beruht also darauf, mittels eines asphärischen Spiegels eine Energieumverteilung zumindest in einer Schnittebene vorzunehmen und ein inhomogenes, insbesondere Gauß-verteiltes Profil so umzuwandeln, daß in der Schnittebene eine weitgehend homogene Energieverteilung vorliegt. Bildet man den Spiegel in zwei Querschnittsrichtungen erfindungsgemäß asphärisch aus, erhält man eine Homogenisierung in zwei Schnittebenen, also ein homogenisiertes Feld. Durch den Einsatz eines asphärischen Spiegels kann eine große spektrale Bandbreite für die Beleuchtungsstrahlung abgedeckt werden, bei gleichzeitiger homogener Ausleuchtung. Erfindungsgemäß wurde erkannt, daß die reflektierende Asphäre, die in einer Schnittebene im Bereich des Auftreffpunktes des Ursprungsstrahls stärker gekrümmt ist als in auftreffpunktfernen Bereichen, eine Wellenlängenabhängigkeit bei Fokussierung und Energieumverteilung vermeidet, wobei gleichzeitig das erfinderische Konzept der variierenden Krümmung des asphärischen Spiegels eine große Vielfalt an Energieumverteilungen eröffnet. Mit der erfindungsgemäßen Beleuchtungsvorrichtung lassen sich Gaußbündel beispielsweise derartig umformen, daß in über 80% des ausgeleuchteten Bereiches die Intensität nicht unter 80% des Maximalwertes fällt. Dies ist eine im wesentlichen homogene Verteilung im Sinne der Erfindung.

Die Variante mit zweiachsiger asphärischer Krümmung kann besonders vorteilhaft zur Homogenisierung in einer Zwischenbildebene eines Weitfeldmikroskopes zum Einsatz kommen. Auch bei multipunktscannenden Mikroskopen ermöglicht die homogene Ausleuchtung eines Zwischenbildes vor dem Element, das die Punktwolke erzeugt (z.B. Nipkow-Scheibe), eine gleichmäßige Ausleuchtung der Probe mit örtlich im wesentlichen einheitlicher Strahlintensität. Auch ermöglicht die erfindungsgemäße Konvertierungseinheit die Beleuchtung einer Objektivpupille, so daß eine besonders gute (hoch aufgelöste) Abbildung erreicht wird, da eine homogen gefüllte Pupille die optische Auflösung auszuschöpfen erlaubt.

Eine besonders einfach zu fertigende Ausführungsform ist ein Spiegel, der keilförmig und mit abgerundetem First ausgebildet ist. Ein solcher Spiegel kann auf einfache Weise aus einem Quader hergestellt werden und erzielt eine Brennlinie mit homogener Energieverteilung.

In einer mathematisch besonders einfach zu beschreibenden Variante wird der Spiegel durch eine konische Konstante sowie den Abrundungsradius des Firstes definiert und genügt in (x,y,z)-Koordinaten hinsichtlich der z-Koordinate der Gleichung $y^2 /[c + (c^2 - (1 + Q) y^2)^{1/2}]$, wobei c der Abrundungsradius des Firstes und Q die konische Konstante ist.

In der Mikroskopie möchte man für eine zeilenförmige Beleuchtung die Strahlung nicht nur homogen entlang einer längserstreckten Linie verteilen, sondern gegebenenfalls auch die Weite der Linie an den Durchmesser der Eintrittspupille eines nachfolgenden optischen Systems anpassen. Um dies zu erreichen, muß der asphärische Spiegel auch eine Strahlaufweitung quer zur Linienrichtung bewirken. Dies kann bei der eingangs genannten Variante eines keilförmigen Spiegels mit abgerundetem First besonders einfach dadurch erreicht werden, daß die Spiegelfläche oder zumindest der First entlang der First-Längsachse gekrümmt ist.

Der asphärische Spiegel mit abgerundetem First ist also dann zweidimensional gekrümmt, wobei in einer ersten Schnittrichtung (senkrecht zur Längsachse) ein Kegel mit abgerundeter Spitze, in einer zweiten Schnittrichtung (längs des Firstes) eine parabolische oder sphärische Krümmung vorliegen kann. Letztere Krümmung stellt dann die Höhe des ausgeleuchteten Feldes ein, wohingegen die asphärische Form senkrecht zur Längsachse die Aufweitung längs des Feldes bewirkt und aufgrund der Asphärizität eine Energieumverteilung zur Folge hat. Längs des Feldes ist damit eine weitgehend homogene Energieumverteilung erreicht.

Ein zusätzlich längs des Firstes, beispielsweise sphärisch oder parabolisch, gekrümmter Spiegel läßt sich in einer einfachen mathematischen Beschreibung wie folgt fassen:

$$f(x,y) = \sqrt{(a(y) - r_x)^2 - x^2} - r_x$$

, wobei $r_x$ der Krümmungsradius entlang des Firstes, d. h. in der oben genannten zweiten Schnittrichtung ist.

Um bei dem in zwei Richtungen gekrümmten Spiegel (z. B. in der ersten Schnittrichtung asphärisch, in der zweiten sphärisch) eine Anpassung zur vollen Ausleuchtung eines Zwischenbildes oder einer Eintrittspupille eines nachfolgenden optischen Systems zu bewirken, ist es zweckmäßig dem Spiegel eine Sammeloptik, z. B. in Form eines Sammelspiegels, nachzuordnen. Üblicherweise wird man für die Erzeugung eines rechteckigen Feldes dabei einen zylindrischen oder torischen Sammelspiegel einsetzen, da damit ein rechteckiges Feld erhalten wird, wie es für die meisten Anwendungsfälle erwünscht ist. Für andere Feldformen mag die Spiegelform abweichen, so kann man beispielsweise auch für diesen zweiten Spiegel die erfindungsgemäße Asphäre verwenden, um eine Kombination aus Homogenisierung der Pupillenfüllung in einer ersten Richtung (durch eine der Asphären) und des Zwischenbildes in der verbleibenden Richtung (durch die andere Asphäre) zu erreichen. Auch kann durch die zusätzliche Asphäre eine Bildfehlerkompensation bewirkt werden. Natürlich kann man die zweite Asphäre auch zusätzlich zum Sammelspiegel vorsehen.

Für die Ausführungsform des asphärischen Spiegels mit sphärischer Krümmung in der zweiten Schnittebene ist es deshalb bevorzugt, daß der Sammelspiegel in x-Richtung einen Krümmungsradius gleich $r_x$ + 2 · *d* aufweist, wobei d der Abstand zwischen asphärischem Spiegel und Sammelspiegel ist. Der Krümmungsradius $r_x$ des asphärischen Spiegels in der zweiten Schnittebene skaliert dann direkt die Höhe des ausgeleuchteten rechteckigen Feldes bzw. des Profils des Beleuchtungsstrahls.

Natürlich kann zur homogenen Pupillenausleuchtung auch ein in beiden Schnittrichtungen erfindungsgemäß asphärischer Spiegel verwendet werden. Bei einer rotationssymmetrischen Asphäre bewirkt dies dann ein homogen ausgeleuchtetes Kreisfeld. Ein derart homogen ausgeleuchtetes Bildfeld kann für eine Weitfeldbeleuchtung eines Mikroskopes verwendet werden. Auch ist es möglich, aus der derart beleuchteten Pupille für ein scannendes Verfahren, z.B. Mehrpunktscanner wie Nipkow-Scanner, einzelne Bereiche auszuwählen und zu verwenden.

Zur Ausleuchtung des asphärischen Spiegels ist es vorteilhaft, die Symmetrieachse des Spiegels unter einem Winkel zwischen 4° und 20° zur Einfallsachse des Ursprungsstrahles, der z. B. gaußförmig profiliert ist, zu legen, da dann ein kompakter Aufbau erhalten werden kann. Der nachgeordnete Sammelspiegel, der beispielsweise zylindrisch oder torisch ausgebildet sein kann, sammelt die von der Asphäre umverteilte Strahlungsenergie und kompensiert während der Propagation auflaufende Wellenaberrationen. Spielen solche Wellenaberrationen in einfachen Fällen keine Rolle, kann anstelle des Sammelspiegels auch eine sphärische Linse verwendet werden.

Die Erfindung wird nachfolgend unter Bezugnahme auf die Zeichnungen in Ausführungsbeispielen noch näher erläutert. In den Zeichnungen zeigt:

Fig. 1  eine schematische Darstellung des Strahlengangs in einer Beleuchtungsvorrichtung zur Bereitstellung eines rechteckig profilierten Beleuchtungsstrahls in einer ersten Schnittebene;

Fig. 2  den Strahlengang der Figur 1 in einer zweiten, senkrecht zur ersten Ebene gelegene Schnittebene;

Fig. 3  eine Computerdarstellung eines Asphärenspiegels, der im Strahlengang der Figuren 1 und 2 verwendet wird;

Fig. 4  eine Schnittdarstellung durch den Asphärenspiegel der Figur 3 zur Verdeutlichung der diesen Spiegel charakterisierenden Größen;

Fig. 5  eine Darstellung ähnlich der Figur 4 für einen nur in einer Schnittebene strahlformenden Spiegel;

Fig. 6  eine Darstellung ähnlich der Figur 4 für einen

Fig. 7    ein mit dem Strahlengang der Figuren 1 und 2 erreichtes Intensitätsprofil in einer Schnittebene,

Fig. 8    eine schematische Darstellung eines Laserscanningmikroskops mit der Beleuchtungsanordnung der Figuren 1 und 2;

Fig. 9    einen Strahlengang zur Homogenisierung der Ausleuchtung eines Zwischenbildes, und

Fig. 10    einen Strahlengang zur Homogenisierung der Füllung einer Objektivpupille.

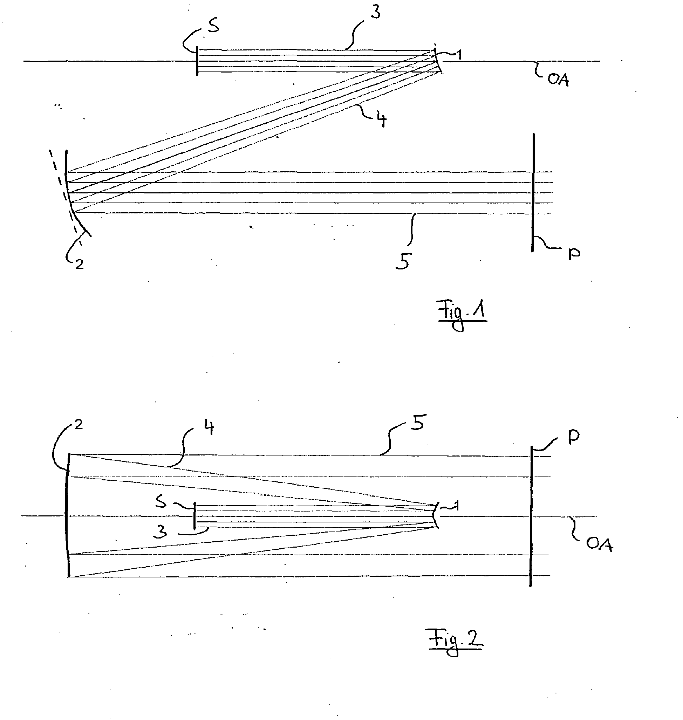

Die Figuren 1 und 2 zeigen eine Beleuchtungsanordnung, bei der Strahlung einer Strahlquelle S hinsichtlich des Strahlprofils umgeformt wird. Figur 1 ist ein Schnitt in einer (z,x)-Ebene; Figur 2 ist ein Schnitt senkrecht dazu in einer (z,y)-Ebene. Die Strahlquelle S gibt einen Strahl ab, der in jeder Schnittrichtung senkrecht zur Ausbreitungsrichtung gaußförmig profiliert ist. Nach der Umformung liegt in einer Profilebene P ein Strahl vor, der im wesentlichen ein rechteckiges Feld ausleuchtet, wobei die Intensitätsverteilung entlang der Feldlängsachse nicht gaußförmig sondern kastenförmig ist.

Zur Strahlumformung wird ein Asphärenspiegel 1 eingesetzt, der die Strahlung aufweitet. Die aufgeweitet Strahlung wird mittels eines Sammelspiegels 2 wieder parallelisiert. Der Asphärenspiegel 1 ist mit einem Ursprungsstrahl 3 aus der Strahlquelle S beaufschlagt, der das erwähnte rotationssymmetrische gaußförmige Strahlprofil aufweist. Der Asphärenspiegel 1 ist in dem in Figur 1 dargestellten Schnitt gemäß einem Krümmungsradius $r_x$ gekrümmt, in dieser Ebene also sphärisch. Die asphärische Komponente kommt erst in dem in Figur 2 dargestellten und noch zu erläuternden Schnitt zum Tragen. Augrund der Sphärizität des Asphärenspiegels 1 entlang der x-Achse wird der vom Asphärenspiegel 1 abgegebene divergierende Strahl unter Beibehaltung des Gaußprofils aufgeweitet. Der Sammelspiegel 2, der in der Schnittebene der Figur 1 ebenfalls sphärisch ist, sorgt für einen profilierten Strahl 5, der in der Profilebene P in der Schnittdarstellung der Figur 1 ebenfalls Gaußprofil hat.

Für manche Anwendungen ist diese Aufweitung nicht gewünscht. Der Asphärenspiegel 1 und der Sammelspiegel 2 sind dann in der dargestellten Schnittebene nicht gekrümmt. Die gestrichelte Darstellung des Spiegels 2 symbolisiert dies. Natürlich divergiert das Strahlenbündel dann nicht.

Figur 2 zeigt einen Schnitt senkrecht zur Figur 1. In dieser Ebene ist der Asphärenspiegel 1 asphärisch ausgebildet und der von der Strahlquelle S abgegebene Ursprungsstrahl 3 wird nun energieumverteilend in einen divergierenden Strahl 4 umgesetzt. Der Asphärenspiegel 1 reflektiert mit zunehmendem Winkel zur optischen Achse OA zunehmend Strahlleistung, so daß im divergierenden Strahl 4 in der Schnittdarstellung der Figur 2 gesehen eine Energie umverteilt wird. Der Sammelspiegel 2 sammelt den in der Schnittdarstellung der Figur 2 im Querschnitt nicht mehr gaußförmigen, divergierenden Strahl 4 und parallelisiert die Strahlung zu einem profilierten Strahl 5. In dieser Ebene ist deshalb in Figur 2 im Gegensatz zu Figur 1 eine nicht äquidistante Verteilung der zur Veranschaulichung eingezeichneten Teilstrahlen gezeigt.

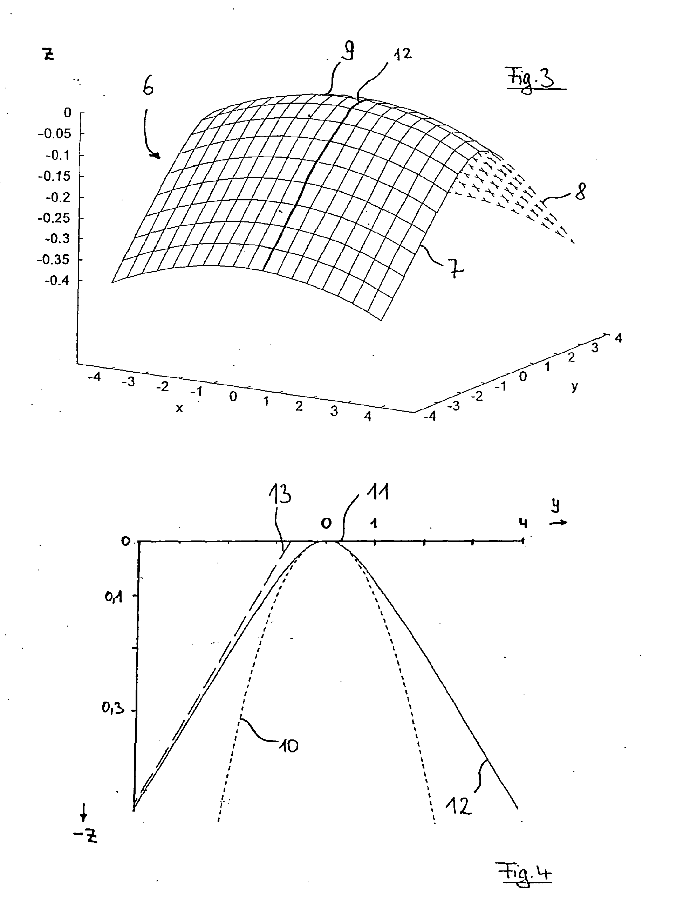

Die Wirkung des in Fig. 1 und 2 in einer konvexen Bauweise gezeigten Asphärenspiegels 1 wird noch besser erkennbar, wenn man die in Figur 3 exemplarisch dargestellte Spiegelfläche 6 betrachtet. Die Spiegelfläche 6 weist zwei Dachflächen 7, 8 auf, die in einem First 9 zusammenlaufen. Gleichzeitig ist die Spiegelfläche 6 entlang der x-Achse sphärisch gekrümmt, wie auch an der Krümmung des Firstes 9 deutlich wird. Die Spiegelfläche 9 ist also in einem (z,y)-Schnitt (parallel zur y-Achse) kegelig mit abgerundeter Spitze. In einem Schnitt parallel zur x-Achse ((z,x)-Schnitt) liegt dagegen eine sphärische Krümmung vor. Bei einem konkaven Asphärenspiegel 1 gilt dies analog.

Die asphärische Krümmung in der (z,y)-Ebene bewirkt die in Figur 2 dargestellte Energieumverteilung, da durch das nur im Bereich der Spitze abgerundete Kegelprofil in zunehmende Winkel zur optischen Achse auch zunehmende Energieanteile reflektiert werden. Die sphärische Krümmung in der (z,x)-Ebene bewirkt dagegen eine profilbeibehaltende Aufweitung des Strahls, wie sie in Figur 1 dargestellt ist. Das ursprüngliche, rotationssymmetrische gaußförmige Profil wird somit zu einem annähernd rechteckigen Profil umgestaltet. Bei Asphärität in beiden Schnittebenen ist das Feld in beiden Schnittebenen homogenisiert.

Figur 4 zeigt eine Schnittlinie 12 der Spiegelfläche 6 in einem (z,y)-Schnitt, d. h. in einem Schnitt längs der y-Achse. Die Schnittlinie 12 ist zur Verdeutlichung nicht nur in Figur 4, sondern auch als dickere Linie in Figur 3 eingetragen. Ihre Form ist im wesentlichen durch zwei geometrische Faktoren bestimmt - zum einen durch eine Parabel 10, die die Form der abgerundeten Spitze der Schnittlinie 12 festlegt, und zum anderen durch eine Asymptote 13, die den Verlauf der Schnittlinie 13 fern der Spitze 11 definiert. Die Parabel 10 kann durch Angabe eines Krümmungsradius für die Spitze definiert werden. Die Asymptote 13 ist durch eine konische Konstante Q festgelegt. Für gegen Unendlich gehende y-Werte nähert sich die Schnittlinie 12 an die Gerade $1/(Q \cdot c) + y/(1-(1+Q)^{1/2})$an. Die konische Konstante Q bestimmt also den Anstieg $1/(1-(1+Q))^{1/2}$ im äußeren sphärischen Bereich. Der Radius c legt die Krümmung im Bereich der Spitze 11 fest. Insgesamt wird die Schnittlinie deshalb durch die Gleichung $y^2 /[c + (c^2 - (1 + Q)y^2)^{1/2}]$ definiert.

Die für eine Schnittrichtung erläuterte Asphärizität kann natürlich auch in der anderen Schnittrichtung vorgesehen werden. Man erreicht damit ein homogen ausgeleuchtetes ellipsenoder kreisförmiges Feld; letzteres bei einem rotationssymmetrischen Asphärenspiegel 1. Alternativ kann auf die Sphärizität in der x-Richtung verzichtet werden. Der Asphärenspiegel 1 hat dann zu jeder x-Koordinate die Profilform der Schnittlinie 12.

Die in Figur 3 dargestellte Spiegelfläche hat einen Krümmungsradius c = 10 mm, eine konische Konstante Q = -100 sowie einen Krümmungsradius entlang der x-Achse von $r_x$ = 100 mm. Der Parameter $r_x$ wird üblicherweise sehr viel größer als der Durchmesser des Ursprungsstrahls 3 gewählt werden.

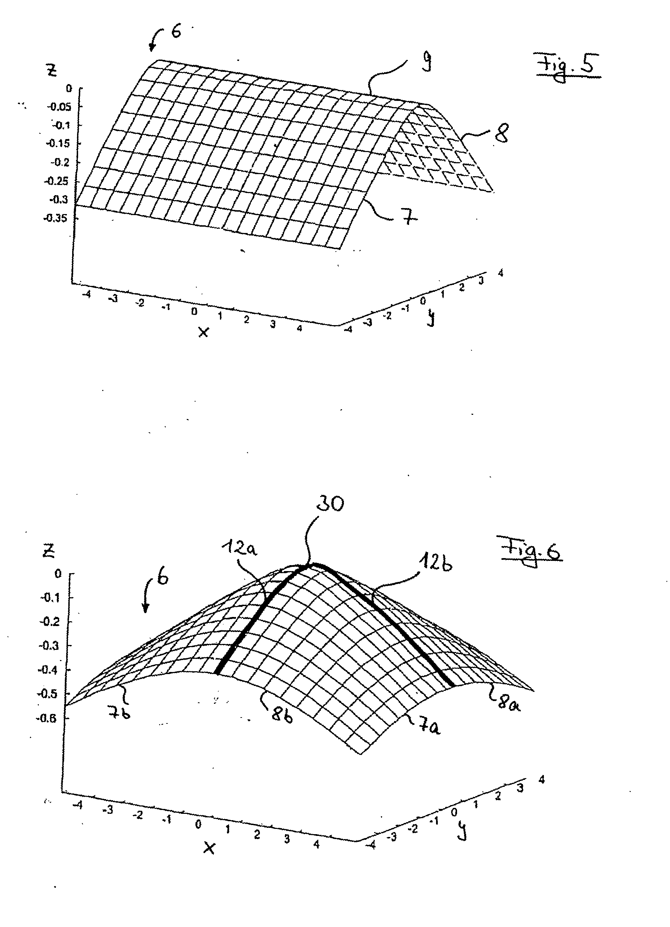

Figuren 5 und 6 zeigen Darstellungen, ähnlich der Figur 3, wobei die Spiegelfläche 6 der Figur 5 allerdings lediglich entlang der y-Achse gekrümmt ist und keine Krümmung entlang der x-Achse aufweist. Die Spiegelfläche 6 hat eine Dach-Form mit einem abgerundeten First 9. Mit dieser Spiegelfläche 6 entfällt die in Figur 1 dargestellte gleichmäßige Aufweitung des Strahles in der (z,x)-Ebene. Der in Figur 1 eingezeichnete divergierende Strahl 4 entspricht bei der Verwendung der Bauweise gemäß Figur 5 dann in dieser Ebene dem Ursprungsstrahl 3.

In der in Figur 6 gezeigten Bauweise ist die Spiegelfläche 6 dagegen nicht nur entlang der y-Achse sondern auch entlang der x-Achse asphärisch gekrümmt. Anstelle der Dachflächen 7, 8 der Figur 3 liegen somit Dachflächen 7a, 8a in der (z,y)-Ebene sowie 7b, 8b in der (z,x)-Ebene vor, wobei diese Dachflächen in den genannten Schnittebenen jeweils asphärisch gekrümmt sind. Die Spiegelfläche 6 der Figur 6 weist deshalb nicht nur eine Schnittlinie 12, sondern zwei Schnittlinien 12a, 12b auf, die jeweils dem anhand Figur 4 geschilderten Zusammenhang genügen und durch die erwähnten Gleichungen beschrieben werden. Soll mit Hilfe des Asphärenspiegels 1 der konvertierte Strahl rotationssymmetrischen Querschnitt haben, ist die Spiegelfläche 6 rotationssymmetrisch bezogen auf die Spitze 30, die in der Figur 6 als Schnittpunkt der Schnittlinien 12a, 12b eingezeichnet ist, zu wählen. Gestaltet man die Spiegelfläche 6 mit Schnittlinien 12a und 12b, bei denen unterschiedliche konische Konstanten Q bzw. Krümmungsradien c gewählt sind, erreicht man einen elliptischen Strahlquerschnitt.

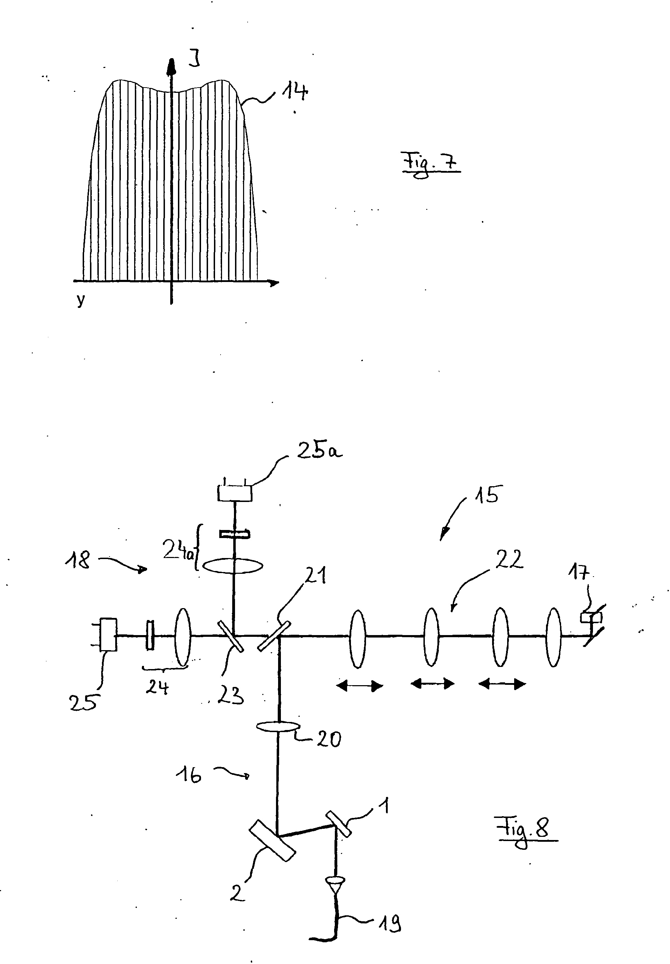

Das in den Figuren 3, 5 und 6 dargestellte Profil der Spiegelfläche 6 in der (z,y)-Ebene bewirkt die in Figur 7 als Profil 14 dargestellte annähernde Gleichverteilung der Intensität I in der Profilebene P, wobei die Darstellung der Figur 7 das Profil 14 entlang der y-Achse zeigt. Wie zu sehen ist, liegt in 80% des ausgeleuchteten Bereiches die Strahlungsintensität bei über 80% des Maximalwertes. Das Profil 14 ist annähernd kastenförmig, jedenfalls einem Rechteck sehr viel näher als dem ursprünglich vorhandenen Gaußprofil. Bei der oben erwähnten rotationssymmetrischen Variante gilt das Profil 14 für jede Schnittebene, die Ordinate zeigt dann den Radius des Feldes.

Die Spiegelfläche 6 des Asphärenspiegel 1 kann auf verschiedenste Weise gefertigt werden. So kann in einen Zylinder, der einen Krümmungsradius hat, der den Krümmungsradius $r_x$ der Spiegelfläche in der (z,x)-Ebene entspricht, das der Schnittlinie 12 entsprechende Profil eingearbeitet werden. Will man die Spiegelfläche 6 der Figur 5, die in der (z,x)-Ebene nicht gekrümmt ist, d. h. deren Krümmungsradius in dieser Schnittebene als unendlich angenommen werden kann, kann die Bearbeitung an einem Quader oder Keil erfolgen, der dann im Bereich des Firstes entsprechend der durch die Parabel 10 vorgegebenen Krümmung c abgerundet wird. Grundsätzlich und besonders bei $r_x$-Radien kleiner 0 und bei der Bauweise gemäß Figur 6 können Abformtechniken, insbesondere als Replika-Techniken mit mehrfacher Abformung, zur Ausbildung der Spiegelfläche 6 des Asphärenspiegels 1 eingesetzt werden.

Zur Erzeugung des profilierten Strahles 5 ist dem Asphärenspiegel 1, wie in den Figuren 1 und 2 gezeigt, ein Sammelspiegel 2 nachgeordnet. Dieser ist z. B. als torischer Spiegel mit Krümmungsradien $r_{tx}$, $r_{ty}$ ausgebildet und parallelisiert den divergierenden Strahl 4. Dabei läuft der divergierende Strahl 4 sowohl bedingt durch die sphärische Krümmung (in der (z,x)-Ebene) des Asphärenspiegels 1 als auch durch das asphärische Profil gemäß der Schnittlinie 12 bedingt auseinander. Zur Kollimation des divergierenden Strahles 4 ist der Sammelspiegel 2 deshalb als torischer Spiegel mit unterschiedlichen Krümmungsradien $r_{tx}$ und $r_{ty}$ ausgebildet. Die erstgenannte Divergenz stellt die Höhe des vom profilierten Strahl 5 auszuleuchtenden rechteckigen Feldes ein, die zweitgenannte Divergenz bewirkt die Aufweitung entlang der längeren Ausdehnung.

Um die Höheneinstellung des auszuleuchtenden rechteckigen Feldes besonders einfach vornehmen zu können, wird für den torischen Spiegel der Radius $r_{tx}$ als $r_{tx}$ + 2·d gewählt, wobei d den Abstand zwischen Asphärenspiegel 1 und Sammelspiegel 2 auf der optischen Achse beschreibt. Man erhält dann einen Strahlaufweitungsfaktor von $r_{tx}/r_x$ und damit etwa $1+2d/r_x$.

Anstelle des Sammelspiegels 2 kann natürlich auch eine entsprechende achromatische torische Linse verwendet werden. Ferner kann zur Behebung des veränderten Bündeldurchmessers quer zur homogenisierten Richtung mindestens ein Zylinderspiegel eingesetzt werden, welcher so dimensioniert ist, daß er zusammen mit dem Radius $r_x$ des Asphärenspiegels 1 sowie dem Radius $r_{tx}$ des Sammelspiegels 2 die Fokussierung und den Bündeldurchmesser quer zur homogenisierten Richtung gezielt verändert. Dieser Zylinderspiegel kann vor dem Asphärenspiegel 1 oder nach dem torischen Sammelspiegel 2 angeordnet werden. Seine Funktion kann man auch durch mindestens eine achromatische Zylinderlinse erreichen.

Figur 8 zeigt eine beispielhafte Verwendung der Beleuchtungsanordnung in einem Laserscanningmikroskop 15, bzw. in dessen Beleuchtungseinheit 16. Die Strahlung auf der Beleuchtungseinheit 16 wird dabei über einen Scankopf 17 als Zeile über eine (nicht dargestellte) Probe gelenkt und in einer Detektoreinheit 18, die in der Ausführungsform der Figur 6 spektral mehrkanalig ausgeführt ist, analysiert.

Im einzelnen wird aus einer Lichtleitfaser 19 ein Strahl ausgekoppelt, dessen gaußförmiges Profil über die beschriebene Kombination aus Asphärenspiegel 1 und Sammelspiegel 2 in einen Strahl umgeformt wird, der im Querschnitt im wesentlichen rechteckig ist. Der Asphärenspiegel 1 ist in einer Schnittebene asphärisch, in der anderen sphärisch ausgeführt. Mittels einer Beleuchtungsoptik 20 wird der Strahl über einen Hauptfarbteiler 21 und eine Zoomoptik 22 zum Scankopf 17 geleitet. Dort wird die derart bereitgestellte Beleuchtungszeile quer zur Zeilenachse über eine Probe abgelenkt. An der Probe im beleuchteten Bereich erzeugte Fluoreszenzstrahlung gelangt über den Scankopf 17 und die Zoomoptik 22 zurück zum Hauptfarbteiler und wird dort aufgrund ihrer zur Beleuchtungsstrahlung unterschiedlichen spektralen Zusammensetzung transmittiert. Ein nachgeordneter Nebenfarbteiler 23 teilt die Fluoreszenzstrahlung in zwei Spektralkanäle auf, die jeweils ein Pinhole-Objektiv 24, 24a aufweisen, das die Strahlung auf eine CCD-Zeile 25, 25a lenkt. Jedes Pinhole-Objektiv bewirkt in einer konfokalen Detektion die Auswahl des Tiefenbereiches, aus dem Fluoreszenzstrahlung zur CCD-Zeile gelangen kann. Es weist eine geeignete Optik mit Schlitzblende auf, die konfokal zur Brennlinie auf der Probe liegt.

Die Verwendung des mittels der Beleuchtungsoptik bereitgestellten linienförmigen Beleuchtungsstrahlbündels ermöglicht eine hochparallele Datenaufnahme, da anders als bei einem üblichen punktabtastenden Laserscanningmikroskop mehrere Probenpunkte gleichzeitig konfokal oder zumindest teil-konfokal auf die CCD-Zeilen 25, 25a abgebildet werden. Im Vergleich zu einem konfokalen Punktscanner ist damit bei gleicher Bildaufnahmezeit, gleichen Bildabmessungen, gleichem Sehfeld und gleicher Laserleistung pro Pixel im Bild ein um den Faktor $\sqrt{n}$ verbessertes Signal/Rausch-Verhältnis erreicht, wenn man mit n die Anzahl n der Pixel in der CCD-Zeile bezeichnet. Ein typischer Wert für diese Anzahl liegt zwischen 500 und 2.000. Als Voraussetzung dafür weist die zeilenförmige Beleuchtung, die von der Beleuchtungseinheit 16 bereitgestellt wird, die n-fache Leistung auf, verglichen mit dem Laserfokus eines konfokalen Punktscanners.

Alternativ kann im Vergleich zu konfokalen Punktscannern bei gleichbleibender Bildaufnahmezeit und gleichbleibendem Signal/Rausch-Verhältnis die auf die Probe eingebrachte Strahlungsintensität um den Faktor n gesenkt werden, wenn die ansonsten wie bei herkömmlichen, punktscannenden Laserscanningmikroskopen aufgebrachte Laserleistung auf das gesamte von der Beleuchtungseinheit 16 ausgeleuchtete Feld verteilt wird.

Die Kombination eines zeilenabtastenden Laserscanningmikroskops zusammen mit der Beleuchtungseinheit 16 ermöglicht also im Vergleich zu konfokalen Punktscannern intensitätsschwache Signale empfindlicher Probensubstanzen bei gleichem Signal/Rausch-Verhältnis und gleicher Probenbelastung um den Faktor n schneller, bei gleicher Aufnahmezeit mit einem um den Faktor $\sqrt{n}$, verbesserten Signal/Rausch-Verhältnis oder bei gleicher Aufnahmezeit mit gleichem Signal/Rausch-Verhältnis mit einer um den Faktor n geringeren Probenbelastung mit der Laserscanningmikroskopie abzubilden. Diese Vorteile sind jedoch erst mit der Beleuchtungseinheit 16 durch Einsatz des Asphärenspiegels 1 in vollem Umfang erreichbar.

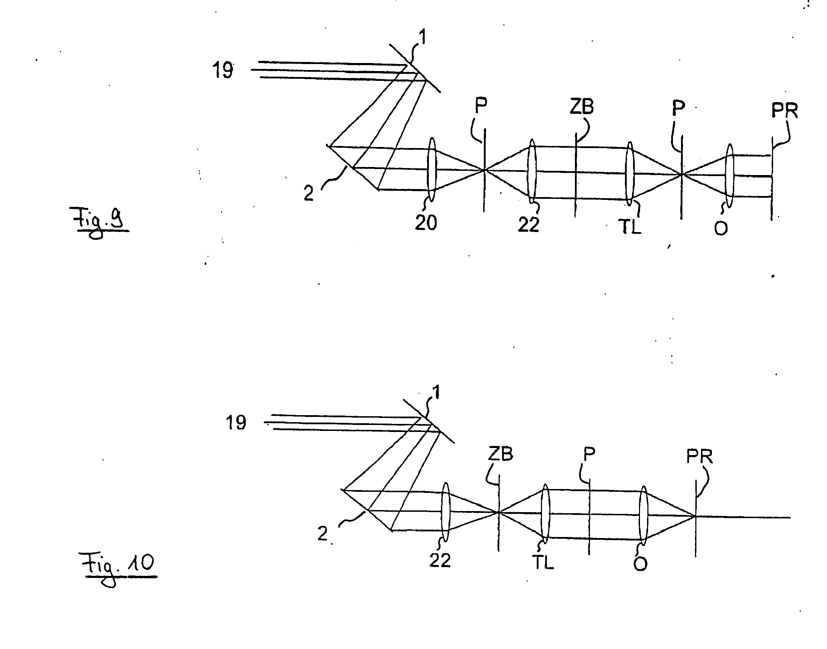

Die Figur 9 und 10 zeigen zwei Möglichkeiten, wie eine homogene Ausleuchtung mit Hilfe der Konvertierungseinheit eingesetzt werden kann. Figur 9 zeigt die Verwendung der Asphäre 1 mit nachgeordnetem Sammelspiegel 2 zur homogenen Füllung eines Zwischenbildes ZB, das zwischen der Zoomoptik 22 und einer nachgeordneten Tubuslinse TL mit anschließendem Objektiv O liegt. Diese nachgeordnete Optik TL, O bildet das homogen ausgeleuchtete Zwischenbild auf eine Probe PR ab, so daß eine homogene Weitfeldbeleuchtung erreicht ist. Die Figur 9 zeigt, daß die geschilderte Konvertierungseinheit als Homogenisierungsmittel in einem Lichtmikroskop oder in einem parallel scannenden Mikroskopsystem beispielsweise mit einem Nipkow-Scanner oder einem Multipunktscanner vorteilhaft ist. Hier wird auf Multipunkt oder Nipkow- Anordnungen in US 6.028.306, WO 88 07695 oder DE 2360197 A1 verwiesen, die in die Offenbarung einbezogen werden. Gleichfalls einbezogen sind Resonanzscanneranordnungen wie in Pawley, Handbook of Biological Confocal Microscopy , Plenum Press 1994, Seite 461ff beschrieben.

Einen alternativen Einsatz zeigt Figur 10, bei dem die Konvertierungseinheit zur gleichmäßigen Füllung der Pupille P zwischen Tubuslinse TL und Objektiv O dient. Damit kann die optische Auflösung des Objektivs O voll ausgeschöpft werden. Diese Variante ist zweckmäßig in einem punkt-scannenden Mikroskopsystem oder in einem linien-scannenden System (bei letzterem zusätzlich zu der Achse, in der auf bzw. in die Probe fokussiert wird).

**Patentansprüche**

1.   Beleuchtungsvorrichtung zur Bereitstellung eines in mindestens einer Querschnittsrichtung im wesentlichen homogenen Beleuchtungsstrahls (5)für ein ein Lichtrastermikroskop (15) mit linienförmiger Abtastung, wobei ein im Querschnitt im wesentlichen rotationssymmetrischer, insbesondere gaußförmiger, Ursprungsstrahl (3) auf eine Konvertierungseinheit (1, 2) geleitet ist, die den Beleuchtungsstrahl (5) abgibt, **dadurch gekennzeichnet, daß** die Konvertierungseinheit mindestens einen asphärischen, konvexen oder konkaven Spiegel (1) aufweist, der im Bereich des Auftreffpunktes des Ursprungsstrahls (3) stärker gekrümmt ist, als in auftreffpunktfernen Bereichen.

2. Beleuchtungsvorrichtung nach Anspruch 1, **dadurch gekennzeichnet, daß** der Spiegel (1) keilförmig mit abgerundetem First (9) bzw. invers dazu ausgebildet ist.

3. Beleuchtungsvorrichtung nach Anspruch 1 oder 2, **dadurch gekennzeichnet, daß** die Spiegelfläche (6) in kartesischen, (x,y,z)-Koordinaten der Funktion $y^2/[c + (c^2 - (1 + Q)y^2)^{1/2}]$ genügt, c ein Krümmungsradius des Firstes (9) und Q eine konische Konstante ist.

4. Beleuchtungsvorrichtung nach Anspruch 2, **dadurch gekennzeichnet, daß** die Spiegelfläche zusätzlich entlang der Längsachse des Firstes (9) gekrümmt ist.

5. Beleuchtungsvorrichtung nach Anspruch 3 und 4, **dadurch gekennzeichnet, daß** der asphärische Spiegel (1) der Funktion

$$f(x,y) = \sqrt{(a(y) - r_x)^2 - x^2} - r_x$$ genügt,

wobei $r_x$ der Krümmungsradius entlang der Längsachse des Firstes (9) und a(y) die Funktion des Anspruches 3 ist.

6. Beleuchtungsvorrichtung nach einem der obigen Ansprüche, **dadurch gekennzeichnet, daß** eine Symmetrieachse des Spiegels (1) unter einem Winkel von 4° bis 20° zur Einfallsachse (OA) des Ursprungsstrahles (3) liegt.

7. Beleuchtungsvorrichtung nach einem der obigen Ansprüche, **dadurch gekennzeichnet, daß** dem asphärischen Spiegel (1) ein zweiter Spiegel (2) nachgeordnet ist.

8. Beleuchtungsvorrichtung nach Anspruch 5, **dadurch gekennzeichnet, daß** der zweite Spiegel (2) zylindrisch oder torisch ist.

9. Beleuchtungsvorrichtung nach den Ansprüchen 5 und 8, **dadurch gekennzeichnet, daß** der zweite Spiegel (2) in x-Richtung einen Krümmungsradius gleich ($r_x+2{\cdot}d$) aufweist, wobei d der Abstand zwischen asphärischem Spiegel (1) und zweitem Spiegel (2) ist.

10. Verwendung einer Beleuchtungsvorrichtung nach mindestens einem der vorangehenden Ansprüche zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:

• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.
• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

11. Verwendung von Anordnungen und/ oder Verfahren nach mindestens einem der vorangehenden Ansprüche für die Untersuchung von innerzellulären Transportvorgängen , insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen

**12.** Verwendung einer Beleuchtungsvorrichtung nach mindestens
einem der vorangehenden Ansprüche für die Darstellung molekularer und anderer subzellulärer Wechselwirkungen ,insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukturen

**13.** Verwendung einer Beleuchtungsvorrichtung nach mindestens einem der vorangehenden Ansprüche bei schnellen Signalübertragungsvorgängen , insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem

Fig. 1

Fig. 2

Fig.3

Fig.4

Fig. 5

Fig. 6

Fig. 7

Fig. 8

EP 1 672 404 A1

19

1

2

P        ZB        P        PR

20        22        TL        O

_Fig.9_

19

1

2

ZB        P        PR

22        TL        O

_Fig. 10_

**Europäisches Patentamt**

**EUROPÄISCHER RECHERCHENBERICHT**

Nummer der Anmeldung

EP 04 02 3501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 285 320 A (HOHBERG ET AL) 8. Februar 1994 (1994-02-08) * Abbildungen * * Ansprüche 1,9 * * Spalte 4, Zeile 8 - Spalte 7, Zeile 19 * ----- | 1-6 | G02B21/00 G02B21/06 G02B5/08 G02B27/09 |
| Y | WO 02/086592 A (THOMSON LICENSING S.A; BRENNER, KARL-HEINZ) 31. Oktober 2002 (2002-10-31) * Ansprüche 4,6 * ----- | 1-13 | |
| X | US 4 475 027 A (PRESSLEY ET AL) 2. Oktober 1984 (1984-10-02) * Zusammenfassung * * Abbildung 3 * ----- | 1,7,8 | |
| Y | US 2004/031930 A1 (WOLLESCHENSKY RALF ET AL) 19. Februar 2004 (2004-02-19) * Absatz [0066] - Absatz [0080] * ----- | 1-13 | |
| Y | FR 2 849 509 A (JOBIN YVON SAS) 2. Juli 2004 (2004-07-02) * Abbildungen * * Seite 4, Zeile 4 - Seite 8, Zeile 23 * ----- | 1-13 | RECHERCHIERTE SACHGEBIETE (Int.Cl.7) G02B |
| A | US 2004/125441 A1 (WANG HAU-WEI ET AL) 1. Juli 2004 (2004-07-01) * Absatz [0005] - Absatz [0022]; Abbildung 3 * ----- | 1-13 | |
| A,D | US 4 826 299 A (POWELL ET AL) 2. Mai 1989 (1989-05-02) * Abbildungen * * Spalte 2, Zeile 50 - Spalte 5, Zeile 11 * ----- | 1-3 | |

Der vorliegende Recherchenbericht wurde für alle Patentansprüche erstellt

| Recherchenort | Abschlußdatum der Recherche | Prüfer |
|---|---|---|
| München | 11. Februar 2005 | Windecker, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

# EP 1 672 404 A1

**ANHANG ZUM EUROPÄISCHEN RECHERCHENBERICHT**
**ÜBER DIE EUROPÄISCHE PATENTANMELDUNG NR.** EP 04 02 3501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 5285320 | A | 08-02-1994 | DE | 3912237 A1 | 18-10-1990 |
| | | | DE | 3914275 A1 | 03-01-1991 |
| | | | DE | 59007419 D1 | 17-11-1994 |
| | | | EP | 0392387 A2 | 17-10-1990 |
| | | | JP | 3009302 A | 17-01-1991 |
| WO 02086592 | A | 31-10-2002 | DE | 10121747 A1 | 14-11-2002 |
| | | | WO | 02086592 A1 | 31-10-2002 |
| | | | EP | 1370896 A1 | 17-12-2003 |
| | | | JP | 2004531760 T | 14-10-2004 |
| | | | US | 2004145809 A1 | 29-07-2004 |
| | | | DE | 20122275 U1 | 16-12-2004 |
| US 4475027 | A | 02-10-1984 | CA | 1188553 A1 | 11-06-1985 |
| | | | DE | 3274767 D1 | 29-01-1987 |
| | | | EP | 0080597 A1 | 08-06-1983 |
| | | | JP | 58091422 A | 31-05-1983 |
| US 2004031930 | A1 | 19-02-2004 | DE | 10257237 A1 | 18-06-2003 |
| | | | JP | 2003248175 A | 05-09-2003 |
| | | | US | 2003142292 A1 | 31-07-2003 |
| FR 2849509 | A | 02-07-2004 | FR | 2849509 A1 | 02-07-2004 |
| US 2004125441 | A1 | 01-07-2004 | KEINE | | |
| US 4826299 | A | 02-05-1989 | CA | 1276827 C | 27-11-1990 |

EPO FORM P0461

Für nähere Einzelheiten zu diesem Anhang : siehe Amtsblatt des Europäischen Patentamts, Nr.12/82